# EUROPÄISCHE PATENTSCHRIFT

(11) **EP 4 338 999 B1**
(45) Veröffentlichungstag und Bekanntmachung des Hinweises auf die Patenterteilung: **30.07.2025**
(21) Anmeldenummer: 23191454.0
(22) Anmeldetag: 15.08.2023
(51) Int. Cl.: B60K 35/22, B60R 11/02, B60K 35/00, B60K 37/00, B60R 11/00

(54) **ELEKTRONIKEINHEIT FÜR EIN FAHRZEUG UND HERSTELLUNGSVERFAHREN**
ELECTRONIC UNIT FOR A VEHICLE AND METHOD FOR PRODUCING SAME
UNITÉ ÉLECTRONIQUE POUR VÉHICULE ET PROCÉDÉ DE FABRICATION

(30) Priorität: 19.09.2022 DE 102022209810
(43) Veröffentlichungstag der Anmeldung: 20.03.2024
(73) Patentinhaber: Continental Automotive Technologies GmbH, 30175 Hannover (DE)
(72) Erfinder: Huth, Tobias, 60488 Frankfurt am Main (DE); Schaper, Thomas, 60488 Frankfurt am Main (DE); Thomas, Jörg, 60488 Frankfurt am Main (DE); Schäfer, Doris, 60488 Frankfurt am Main (DE); Wittmeier, Sergej, 60488 Frankfurt am Main (DE); Saar, David, 60488 Frankfurt am Main (DE)
(74) Vertreter: Continental Corporation

(56) Entgegenhaltungen:
- EP-B1- 2 938 510
- DE-A1- 102017 210 938
- DE-U1- 202018 002 037

## Beschreibung

Die Erfindung betrifft eine Elektronikeinheit für ein Fahrzeug umfassend zwei oder mehrere nebeneinander angeordnete Oberflächenelemente mit einer sichtbaren Oberflächenseite und einer gegenüberliegenden Oberflächenunterseite, wobei die Oberflächenelemente jeweils in einem Gehäuse fixiert sind, und wobei das Gehäuse eine zu der Oberflächenunterseite weisende Gehäuseoberseite und eine gegenüberliegende Gehäuseunterseite aufweist und wobei eine Trägerplatte vorgesehen ist, und wobei jeweils die Gehäuse an ihrer Gehäuseunterseite jeweils zumindest ein vorstehendes Fixierelement aufweisen zur Fixierung der Oberflächenelemente an der Trägerplatte wobei die Trägerplatte die zwei oder mehreren Oberflächenelemente miteinander verbindet. Ferner betrifft die Erfindung ein Herstellungsverfahren für eine solche Elektronikeinheit sowie eine Verwendung.

Im Zuge der zunehmenden Nutzung von Displays in Kraftfahrzeugen wird oftmals nicht mehr nur ein einzelnes Display verbaut, beispielsweise als Anzeigevorrichtung für ein Kombiinstrument, sondern eine Gruppe von Displays meist drei oder mehr. Bei diesen Mehrfachdisplays sollen die einzelnen Displays in der Armaturentafel des Fahrzeugs planar / bündig nebeneinander verbaut sein und wie ein durchgehendes Displayband wirken.

Dabei sind die Displays oft separat gebondet, d.h. jedes mit einer Glasplatte versehen. Ferner sind die einzelnen, jeweils mit einer Glasplatte gebondeten Displays in einer gemeinsamen Trägerplatte positioniert, vergleichbar mit einem Bilderrahmen. Das Befestigen der Displays erfolgt mittels Schrauben oder Klipsen üblicherweise direkt an der Trägerplatte. Ein bündiges Erscheinungsbild der Displays lässt sich damit allerdings nicht immer erreichen, da die Displays nun planar mit wenig Toleranzen zueinander in der Trägerplatte eingepasst werden müssen.

Die Montagearbeiten werden für gewöhnlich von Industrierobotern vorgenommen.

Dabei entstehen beim Justieren durch einen solchen Roboter jedoch Positionierungsungenauigkeiten, insbesondere sind die Oberflächenelemente nicht planar nebeneinander ausgerichtet, was insbesondere bei sichtbaren Oberflächenelementen, welche im Fahrzeug verbaut sind, auffällig und störend ist. Zudem entstehen durch das direkte Schrauben bzw. Klipsen der Displays in die Trägerplatte höhere Toleranzen, welche beispielsweise durch mechanische Nacharbeit und somit höhere Kosten minimiert werden müssen.

Die DE 10 2014 019293 A1 offenbart eine Elektronikeinheit für ein Kraftfahrzeug, die aufweist: ein Trägerelement, ein Anzeigemodul, das auf dem Trägerelement angeordnet ist, und mindestens ein mechanisches Verbindungselement, das das Anzeigemodul und das Trägerelement miteinander verbindet, wobei das mindestens eine mechanische Verbindungselement mindestens einen Verrastungsmechanismus aufweist.

Die EP 3029657 A1 offenbart ein Multivisionsanzeigesystem, das Folgendes umfasst: eine Vielzahl von Anzeigen; und mindestens einen Ständer, der so konfiguriert ist, dass er die Vielzahl von Anzeigen so trägt, dass sie auf einer horizontalen Fläche stehen, wobei der Ständer umfasst: eine Basis, die so konfiguriert ist, dass sie von der horizontalen Fläche getragen wird; und eine Vielzahl von Kopplungsrahmen, die so konfiguriert sind, dass sie die Vielzahl von Anzeigen tragen und die gegenseitig miteinander gekoppelt sind, um die relativen Positionen der Vielzahl von Anzeigen einzustellen.

Die DE 10 2017 210938 A1 offenbart eine Anzeigevorrichtung für ein Kraftfahrzeug, umfassend zwei nebeneinander angeordnete Displays mit einer sichtbaren Oberflächenseite und einer gegenüberliegenden Oberflächenunterseite, wobei die Displays jeweils in einem Displaygehäuse fixiert sind, und wobei das Displaygehäuse eine zu der Oberflächenunterseite weisende Gehäuseoberseite und eine gegenüberliegende Gehäuseunterseite aufweist, und wobei ein Halterahmen vorgesehen ist, und wobei jeweils die Displaygehäuse an ihrer Gehäuseunterseite jeweils zumindest eine vorstehende Justageschraube aufweisen zur Fixierung der Displays am Halterahmen, wobei der Halterahmen die zwei Displays miteinander verbindet, wobei jede Justageschraube eine Umspritzung aufweist, welche zwischen Halterahmen und Gehäuseunterseite an der Justageschraube angeordnet ist und mit der Justageschraube lösbar formschlüssig verbunden ist, und wobei die Umspritzungen mit dem Displaygehäuse stoffschlüssig verbunden sind, so dass jedes Display separat lösbar am Halterahmen fixiert ist, und wobei mittels der Umspritzungen eine Anordnung der Displays relativ und planar zueinander bewerkstelligt ist.

Es ist eine Aufgabe der Erfindung, eine Elektronikeinheit für ein Fahrzeug umfassend zwei oder mehrere Oberflächenelemente anzugeben, welche nebeneinander und planar zueinander angeordnet sind. Es ist eine weitere Aufgabe der Erfindung, ein Verfahren zur Herstellung einer solchen Elektronikeinheit sowie eine Verwendung aufzuzeigen.

Diese Aufgaben werden durch eine Elektronikeinheit mit den Merkmalen des Anspruchs 1 und durch ein Verfahren mit den Merkmalen des Anspruchs 11 gelöst. Ferner wird die Aufgabe durch eine Verwendung mit den Merkmalen des Anspruchs 15 gelöst. Bevorzugte Ausgestaltungen der Erfindung sind Gegenstand der abhängigen Ansprüche.

Die Aufgabe wird gelöst durch eine Elektronikeinheit für ein Fahrzeug umfassend zwei oder mehrere nebeneinander angeordnete Oberflächenelemente mit einer sichtbaren Oberflächenseite und einer gegenüberliegenden Oberflächenunterseite, wobei die Oberflächenelemente jeweils in einem Gehäuse fixiert sind, und wobei das Gehäuse eine zu der Oberflächenunterseite weisende Gehäuseoberseite und eine gegenüberliegende Gehäuseunterseite aufweist und
wobei eine Trägerplatte vorgesehen ist, und wobei jeweils die Gehäuse an ihrer Gehäuseunterseite jeweils zumindest ein vorstehendes Fixierelement aufweisen zur Fixierung der Oberflächenelemente an der Trägerplatte, wobei die Trägerplatte die zwei oder mehreren Oberflächenelemente miteinander verbindet, und wobei jedes Fixierelement ein Indexelement aufweist, welches zwischen Trägerplatte und Gehäuseunterseite am Fixierelement angeordnet ist und mit dem Fixierelement lösbar kraftschlüssig und/oder lösbar formschlüssig verbunden ist und wobei die Indexelemente mit der Trägerplatte stoffschlüssig verbunden sind, so dass jedes Oberflächenelement separat lösbar an der Trägerplatte befestigt ist und wobei mittels der Indexelemente eine Anordnung der Oberflächenelemente relativ und planar zueinander bewerkstelligt ist.

Dabei sind die Fixierelemente beispielsweise Schrauben, welche rückseitig durch die Gehäuseunterseite von der Gehäuseunterseite und den Oberflächenelementen wegweisend hindurch geschraubt werden und von der Gehäuseunterseite abstehen. D.h. die Schrauben weisen von der Gehäuseunterseite weg.

Durch die Anbringung von Indexelementen kann ein Toleranzausgleich geschaffen werden, wodurch die zumindest beiden Oberflächenelemente zueinander planar angeordnet werden können.

Ferner weist eine solche Trägerplatte beispielsweise einen Mittelsteg auf, in welche die Oberflächenelemente angeordnet sind. Durch die erfindungsgemäße Elektronikeinheit können somit die Oberflächenelemente nicht nur planar zueinander sondern auch planar zu dem Mittelsteg oder zu den angrenzenden Bauteilen angeordnet werden.

Durch die Elektronikeinheit und die Indexelemente kann eine unlösbare Verbindung zwischen Trägerplatte und Oberflächenelementen vermieden werden, die Indexelemente stellen eine lösbare Verbindung mit den Fixierelementen, beispielsweise durch eine Schraubverbindung, dar. Die zum Teil teuren Oberflächenelemente können so jeweils separat ausgetauscht werden. Ferner kann durch die stoffschlüssige Verbindung mit der Trägerplatte die benötigte Stabilität hergestellt werden.

Durch die Indexelemente kann vor der stoffschlüssigen Verbindung ein passgenaues Ausrichten vor der Fixierung beispielsweise mittels eines Klebstoffs als stoffschlüssige Verbindung bewerkstelligt werden.

Durch die zusätzlichen Indexelemente können zu montierende und zueinander auszurichtende Oberflächenelemente in allen Freiheitsgraden zueinander ausgerichtet werden.

Dabei sind trotz der zusätzlichen Indexelemente die Kosten einer solchen Elektronikeinheit niedriger als zusätzliche Nachbearbeitungsschritte am Gehäuse, beispielsweise einem Metallgehäuse.

Gemäß einem Aspekt der Erfindung weisen die Indexelemente eine mittige Ausnehmung auf. Ferner können die Fixierelemente als längliche Montageelemente ausgebildet sein, und die Indexelemente auf die Montageelemente aufgesteckt sein.

Gemäß einem weiteren Aspekt sind die Indexelemente an den Montageelementen drehbar gelagert. Damit kann eine einfache lösbare Verbindung geschaffen werden.

Insbesondere können die Fixierelemente als Schrauben oder schraubenähnliche Montageelemente ausgebildet sein und die Indexelemente jeweils eine ringförmige Ausnehmung zur Aufnahme der Schraube oder des schraubenähnlichen Montageelementes aufweisen, so dass die Indexelemente und Fixierelemente eine lösbare Schraubverbindung ausbilden.

Dadurch können die Oberflächenelemente durch einfaches Aufschrauben oder beispielsweise durch einen Presssitz auf die Indexelemente montiert werden. Ferner können die Oberflächenelemente einfach und separat gelöst werden. Somit ist weiterhin, trotz der stoffschlüssigen Verbindung zwischen den Indexelementen und der Trägerplatte, beispielsweise mittels Verklebung, die Re-Work Fähigkeit gegeben, indem die Schraubverbindung geöffnet werden kann.

In einer weiteren Ausgestaltung sind die Indexelemente und die Trägerplatte als stoffschlüssige Verbindung miteinander durch einen Klebstoff verklebt, wobei die Trägerplatte entsprechende Durchlässe zum Durchlass des Klebstoffs auf die Indexelemente aufweist. Durch einen Klebstoff kann eine einfache stoffschlüssige Verbindung geschaffen werden.

Gemäß einem weiteren Aspekt der Erfindung weisen die Indexelemente eine mittige Ausnehmung zur Aufnahme der Fixierelemente auf und die Indexelemente zwischen der Trägerplatte und von einem Ausnehmungsrand wegweisende Unterschnitte und/oder Aussparungen auf, zur Aufnahme des Klebstoffs, wodurch zusätzlich zu der stoffschlüssigen Verbindung eine mechanische Fixierung der Trägerplatte mit den Indexelementen ermöglicht ist.

Dadurch fließt der Klebstoff durch die Durchlässe in der Trägerplatte zwischen die Unterschnitte und Aussparungen und bewirkt somit eine verbesserte stoffschlüssige Verklebung zwischen der Trägerplatte und den Indexelementen. Zusätzlich zur Klebeverbindung wird durch Unterschnitte und Aussparungen somit eine mechanische Fixierung, auch als "Klebstoffniete" bezeichnet, erhalten. Insbesondere können die Indexelemente als runde Indexplatten, mit runden Ausnehmungen zur Aufnahme der Fixierelemente ausgebildet sein. Dadurch kann eine gleichmäßige Verklebung und Fixierung mit der Trägerplatte erfolgen.

In weiterer Ausbildung sind die Oberflächenmodule als Displays ausgebildet und das Gehäuse als Displaygehäuse ausgebildet. Dabei können diese Displays im Cockpit zur Steuerung und als Multimediaanzeige angebracht sein. Ferner können die Displays mit je einer Glasplatte optisch gebondet sein und im Gehäuse ein LED-Backlight aufweisen. Insbesondere ist eine Ausrichtung planar zueinander auch bei OLED Technik wichtig. Durch die erzeugte planare Ausrichtung der Displays kann ein "welliger" Eindruck durch Positionierungsungenauigkeiten vermieden werden.

Ferner können gemäß einem weiteren Aspekt der Erfindung die Indexelemente als Kunststoff-Spritzgussbauteil ausgebildet sein. Solche sind kostengünstig herzustellen.

Ferner wird die Aufgabe gelöst durch ein Verfahren zur Herstellung einer Elektronikeinheit mit zwei oder mehreren nebeneinander angeordneten Oberflächenelementen mit einer sichtbaren Oberfläche für ein Fahrzeug umfassend der Schritte:
- Bereitstellen von zwei oder mehr nebeneinander angeordneten Oberflächenelementen auf einer ersten Vorrichtung mit einer sichtbaren Oberflächenseite und einer gegenüberliegenden Oberflächenunterseite, wobei die Oberflächenelemente jeweils in einem Gehäuse fixiert sind, und wobei das Gehäuse eine zu der Oberflächenunterseite weisende Gehäuseoberseite und eine gegenüberliegende Gehäuseunterseite aufweist und wobei jeweils die Gehäuse an ihrer Gehäuseunterseite jeweils zumindest ein vorstehendes Fixierelement aufweisen zur Fixierung der Oberflächenelemente an einer Trägerplatte, die die zwei oder mehreren Oberflächenelemente miteinander verbindet,
- Kraftschlüssiges und/oder formschlüssiges lösbares Verbinden der Fixierelemente mit jeweils einem Indexelement,
- Justieren der Oberflächenelemente in einer ersten Position relativ zueinander und zu der ersten Vorrichtung, so dass die einzelnen Oberflächenelemente planar zueinander angeordnet sind und einfrieren der Position der Oberflächenelemente auf der ersten Vorrichtung in der ersten justierten Position,
- Justieren der Trägerplatte zu den Gehäusen mit den Oberflächenelementen anhand von Ausrichtungspunkten an den Oberflächenelementen und/oder den Gehäusen als auch justieren der Trägerplatte zu den Indexelementen durch eine zweite Vorrichtung, so dass zwischen der Trägerplatte und den Indexelementen jeweils zumindest ein Luftspalt vorhanden ist,
- Stoffschlüssiges verbinden der Indexelemente mit der Trägerplatte, so dass der Luftspalt anhand der stoffschlüssigen Verbindung zumindest teilweise geschlossen wird, so dass jedes Oberflächenelement separat lösbar an der Trägerplatte fixiert ist und wobei mittels der Indexelemente eine Justage der Oberflächenelemente relativ und planar zueinander ermöglicht wird.

Dabei können die Vorteile der Elektronikeinheit auch auf das Verfahren übertragen werden. Insbesondere kann eine wie oben beschriebene Elektronikeinheit durch das Verfahren hergestellt werden.

Dabei kann die zweite Vorrichtung das Ausrichten der Trägerplatte an Ausrichtungspunkten beispielsweise der Glasumrissfläche in allen Richtungen beispielsweise in X, Y, Z- Richtung und das Einfrieren dieser Position bewerkstelligen.

Die zu montierenden und zueinander auszurichtenden Oberflächenelemente werden mit separaten Indexelementen versehen, anhand dessen die Oberflächenelemente in allen Freiheitsgraden zueinander ausgerichtet werden können und auf der ersten Vorrichtung fixiert werden können.

Durch die Montage von mehreren solchen Indexelementen kann ein Toleranzausgleich geschaffen werden, wodurch die zumindest beiden Oberflächenelemente zueinander planar angeordnet werden können.

Auf ein Befestigen von mehreren Oberflächenelementen mittels Schrauben oder Klipsen, welche üblicherweise direkt an der Trägerplatte, beispielsweise einer Bodenplatte, erfolgt, kann dadurch verzichtet werden. Dadurch entfallen zudem die höheren Toleranzen, welche durch das direkte Schrauben bzw. Klipsen der Oberflächenelemente in die Trägerplatte entstehen, und welche beispielsweise durch mechanische Nacharbeit und somit höhere Kosten minimiert werden müssen.

Ferner kann die erste Vorrichtung die Oberflächenelemente zusätzlich zu den, an den Oberflächenelementen angrenzenden Bauteilen ausrichten, d.h. beispielsweise richtet ein Robotersystem die Oberflächenelemente mit den Indexelementen zu den angrenzenden Bauteilen aus (Gap).

Dabei werden die Indexelemente mit den Fixierelementen in weiterer Ausbildung lösbar verbunden, beispielsweise verschraubt oder verpresst.

Anhand der zweiten Vorrichtung, beispielsweise einem Robotersystem, kann die Trägerplatte zu den Indexelementen ausgerichtet werden, so dass eine Lücke zwischen den Indexelementen und der Trägerplatte entsteht (Flus), in welche beispielsweise ein Klebstoff als stoffschlüssige Verbindung mittels einem Klebstoffroboter appliziert wird.

Ferner können gemäß einem weiteren Aspekt der Erfindung die Indexelemente und die Trägerplatte als stoffschlüssige Verbindung miteinander durch einen Klebstoff verklebt werden, wobei die Trägerplatte entsprechende Durchlässe zum Durchlass des Klebstoffs auf die Indexelemente aufweist, und wobei die Indexelemente eine mittige Ausnehmung zur Aufnahme der Fixierelemente aufweisen, und wobei die Indexelemente von einem Ausnehmungsrand wegweisende Unterschnitte und/oder Aussparungen aufweisen, zur Aufnahme des Klebstoffs, wodurch zusätzlich zu der stoffschlüssigen Verbindung eine mechanische Fixierung der Trägerplatte mit den Indexelementen ermöglicht wird.

Auch können gemäß einem weiteren Aspekt der Erfindung die Indexelemente ringförmig ausgebildet sein und eine mittige Ausnehmung aufweisen, wobei die Fixierelemente als längliche Schrauben oder schraubenähnliche Montageelemente ausgebildet sind, und die Indexelemente auf die Schrauben oder schraubenähnliche Montageelemente aufgeschraubt werden, so dass eine lösbare Schraubverbindung zwischen Indexelementen und Fixierelementen ausgebildet wird.

Gemäß einem weiteren Aspekt der Erfindung können die Indexelemente an den Fixierelementen drehbar gelagert werden.

Ferner wird die Aufgabe gelöst durch eine Verwendung des wie oben beschriebenen Verfahrens zur Herstellung einer Anzeigevorrichtung mit mehreren nebeneinander angeordneten Displays als Oberflächenmodule, wobei das Gehäuse als Displaygehäuse ausgebildet wird und wobei die Displays mit je einer Glasplatte optisch gebondet sind.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: einen Ausschnitt einer erfindungsgemäßen Elektronikeinheit,
FIG 2: eine Trägerplatte mit den Indexplatten,
FIG 3: die Elektronikeinheit aus der Trägerplattenansicht,
FIG 4: eine Displayanordnung.

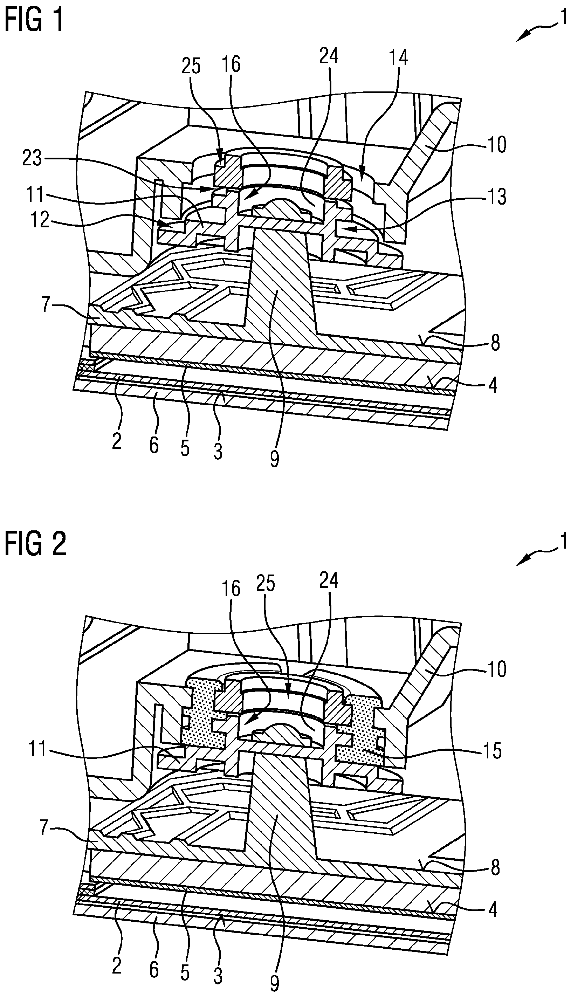

FIG 1 zeigt einen Ausschnitt einer Elektronikeinheit 1 für ein Fahrzeug bei der Montage.

Dabei weist die Elektronikeinheit 1 zwei oder mehrere nebeneinander anzuordnende Oberflächenelemente, welche hier als Displays 2 ausgebildet sind, auf. Dabei weisen die Displays 2 jeweils eine sichtbare Oberflächenseite 3 und eine gegenüberliegende Oberflächenunterseite 4 auf.

Dabei ist auf der Oberflächenunterseite 4 ein sogenanntes LED-Backlight 5 angeordnet, alternativ kann das Display auch als ein OLED (Organic Light Emitting Diodes) ausgebildet sein, wodurch auf ein LED-Backlight 5 verzichtet werden kann, da ein OLED- Display im Prinzip aus einer einzigen Schicht besteht. Jedes der Displays 2 kann mit einer Glasplatte 6 gebondet sein.

Ferner ist jeweils ein Gehäuse 7 mit einer Gehäuseunterseite 8 vorgesehen. Das Gehäuse 7 ist zur Aufnahme der einzelnen Displays 2 mit den LED- Backlight 5 sowie ggf. sich dazwischen befindenden Bauteilen ausgebildet und fixiert die einzelnen Displays 2 als auch die Glasplatten 6. An der Gehäuseunterseite 8 sind jeweils Fixierelemente, welche hier als Schrauben 9 ausgebildet sind, welche von der Gehäuseunterseite 8 hervorstehen, vorgesehen.

Ferner ist eine Trägerplatte 10 vorgesehen, an welchem das Gehäuse 7 fixiert werden soll.

Dabei werden die Displays 2 auf einer ersten Vorrichtung, beispielsweise einem verfahrbaren Tisch mit Roboterarm zueinander planar und passend ausgerichtet. Dabei richtet das Robotersystem das Gehäuse 7 mit den Displays 2 auch zu den angrenzenden Bauteilen des Gehäuses 7 und den Displays 2 aus.

Sind die Gehäuse 7 und die Displays 2 zueinander als auch zu den angrenzenden Elementen /Teilen passend ausgerichtet, wird dieser Zustand bzw. diese Position fixiert, bzw. eingefroren.

Ferner sind auf den Schrauben 9 Indexplatten 11 aufgeschraubt. Durch die Schaubverbindung wird eine lösbare Verbindung zwischen den Schrauben 9 und den Indexplatten 11 geschaffen.

Dabei weisen die Indexplatten 11 eine ringförmige, mittig angeordnete durchgängige Ausnehmung 16, beispielsweise mit einem Außengewinde zum Aufschrauben auf die Schrauben 9, auf. Die Indexplatten 11 werden auf jeder der Schrauben 9 aufgeschraubt.

Die Indexplatten 11 können dabei im Wesentlichen zylindrisch ausgebildet sein oder kreisrund mit einer gewissen Höhe.

Zudem weisen die Indexplatten 11 von einem Ausnehmungsrand 24 wegweisende Aussparungen 12 und Unterschnitte 13 auf, welche zu der später anzubringenden Trägerplatte 10 hinweisen.

Dabei können die Indexplatten 11 als ein Kunststoff-Spritzgussbauteil ausgebildet sein und das Gehäuse 7 aus einem Druckgussteil gefertigt sein. Die Indexplatten 11 mit dem Gehäuse 7 und den Schrauben 9 dienen sozusagen als Aufnehmer der Displays 2.

Anschließend wird die Trägerplatte 10 an Ausrichtungspunkten in allen Richtungen, hier beispielsweise in X, Y, Z-Richtung, ausgerichtet. Solche Ausrichtungspunkte können beispielsweise jeweils die Glasumrissfläche der Glasplatte 6 sein.

Dies kann mithilfe einer zweiten Vorrichtung, beispielsweise eines zweiten Roboterarms oder eines Robotersystems erfolgen.

Dabei richtet das Robotersystem die Trägerplatte 10 zu den Indexelementen 11 aus. Dabei wird durch das Robotersystem die Trägerplatte 10 so ausgerichtet, dass zwischen der Trägerplatte 10 und den Indexelementen 11, bzw. der Oberfläche jedes Indexelementes 11 kleine Luftspalte 23 vorhanden sind, so dass dadurch eine Ausrichtung in allen Freiheitsgeraden ermöglicht wird.

Hat das Robotersystem die Trägerplatte 10 derart in allen Freiheitsgraden ausgerichtet und zusätzlich so, dass zwischen jeder Oberfläche jedes Indexelementes 11 und der Trägerplatte 10 Luftspalte 23 vorhanden sind, wird diese Position eingefroren.

Anschließend appliziert ein Klebstoffroboter einen Klebstoff 15.

Dabei weist die Trägerplatte 10 entsprechende Durchlässe 14 zum Durchlass des Klebstoffs 23 auf die Indexplatten 11 auf.

FIG 2 zeigt eine Trägerplatte 10 mit den Indexplatten 11 und einem Klebstoff 15.

Der Klebstoff 15 fließt beim Applizieren durch die Durchlässe 14 durch die Trägerplatte 10 in die zwischen Indexplatten 11 und Trägerplatte 10 vorhandenen Luftspalte 23 sowie auf die Oberfläche der Indexplatten 11 und verklebt somit die Indexplatten 11 und die Trägerplatte 10 miteinander.

Dadurch sind die Indexplatten 11 und die Trägerplatte 10 stoffschlüssig miteinander verbunden, während die Indexplatten 11 und die Gehäuse 7 durch die Schraubverbindung verbunden sind, wodurch eine kraftschlüssig lösbare Verbindung jeweils zwischen den Schrauben 9 und den Indexplatten 11 vorhanden ist.

Ferner fließt der Klebstoff 15 in die Unterschnitte 13 und Aussparungen 12 der Indexplatten 11 als "Klebstoffniete", so dass zusätzlich zu der stoffschlüssigen Verbindung eine mechanische Fixierung der Trägerplatte 10 mit den Indexplatten 11 ermöglicht ist.

Insbesondere weist jedes Gehäuse 7 mit einem darin fixierten Display 2 mehrere solcher Schrauben 9 auf.

Ferner kann die Trägerplatte 10 noch Auslassungen 25 aufweisen, in denen die Schraube 9 hineinragen kann, ohne mit der Trägerplatte 10 fixiert/verbunden zu sein.

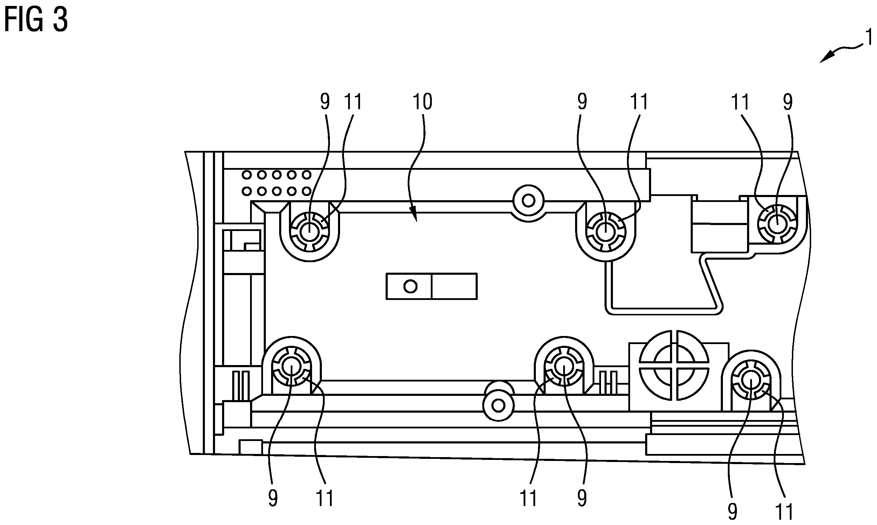

FIG 3 zeigt eine Elektronikeinheit 1 aus der Trägerplattenansicht.

Dabei sind mehrere Schrauben 9 vorhanden, welche jeweils eine Indexplatte 11 aufweisen. Die Anzahl kann dabei je nach Größe der jeweiligen Displays 2 variieren.

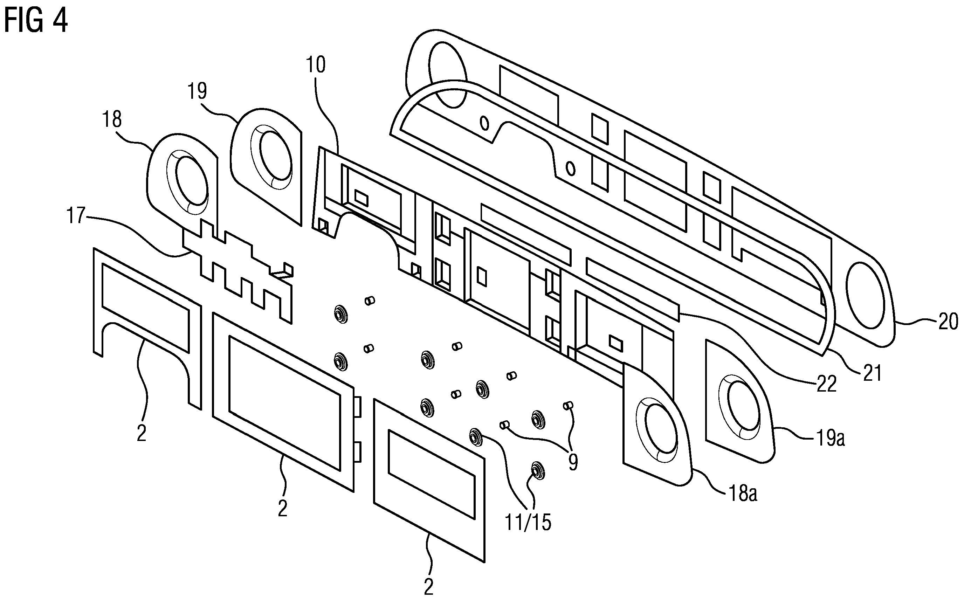

FIG 4 zeigt eine solche Displayanordnung mit mehreren nebeneinander angeordneten Displays 2 in Explosionsansicht.

Diese weist drei Displays 2 mit jeweils einem LED-Backlight 5 (FIG 2) und jeweils einer Glasplatte 6 (FIG 2), angeordnet in jeweils einem Gehäuse 7 (FIG 2) auf. An dem Gehäuse 7 (FIG 2) sind jeweils mehrere Schrauben 9 befestigt.

Ferner ist eine Trägerplatte 10 vorgesehen. Zwischen der Trägerplatte 10 und den Display 2 mit Gehäuse 7 ist ferner eine Crash-Kinematikplatte 17 vorgesehen. Zudem sind als benachbart ausgerichtete Bauteile ein linker Entlüfter 18 und ein rechter Entlüfter 18a angeordnet, welche jeweils in einer Struktur 19,19a angeordnet sind.

Die Trägerplatte 10 kann an einem Backcover 20 mit einem Kleber 21 und mit einem Thermospaltfüller 22 angeordnet sein.

Ferner sind Indexplatten 11 vorgesehen, welche mit Klebstoff 15 an der Trägerplatte 10 stoffschlüssig und mechanisch durch eine Klebstoffniete fixiert sind und mittels der Schraubverbindung lösbar an dem Display 2 bzw. dem Gehäuse 7 befestigt sind.

Trotz der zusätzlichen Indexplatten 11 sind durch eine planparallele Ausrichtung der Displays 2 zu sich als auch zu den umliegenden Bauteilen, hier den Entlüftern 18,18a die Kosten niedriger als zusätzliche Nachbearbeitungsschritte an dem Gehäuse 7.

Die Toleranzen, welche die Trägerplatte 10 bzw. die Displays 2, Gehäuse 7 etc. aus deren Herstellprozess mitbringen, finden sich im Luftspalt 23 (FIG 1) zwischen der

Trägerplatte 10 und den Indexplatten 11 selbst wieder, d.h. dieser Luftspalt 23 (FIG 1) kann in seiner Ausprägung je nach Toleranzlage variieren. Weiterhin ist, trotz Verklebung, die Re-Work Fähigkeit gegeben, indem die Schraubverbindungen geöffnet werden können und die Displays 2 jeweils separat entnommen werden können. Ferner kann das Verfahren bei allen Produkten bei denen Oberflächen/Geräte/Bauteile zueinander ausgerichtet werden müssen, zum Einsatz kommen.

### Bezugszeichenliste:

1 Elektronikeinheit
2 Display
3 Oberflächenseite
4 Oberflächenunterseite
5 LED-Backlight
6 Glasplatte
7 Gehäuse
8 Gehäuseunterseite
9 Schrauben
10 Trägerplatte
11 Indexplatte
12 Aussparungen
13 Unterschnitte
14 Durchlässe
15 Klebstoff
16 Ausnehmung
17 Crash-Kinematikplatte
18, 18a Entlüfter
19, 19a Struktur
20 Backcover
21 Kleber
22 Thermospaltfüller
23 Luftspalt
24 Ausnehmungsrand
25 Auslassungen

## Patentansprüche

1. Elektronikeinheit (1) für ein Fahrzeug umfassend zwei oder mehrere nebeneinander angeordnete Oberflächenelemente mit einer sichtbaren Oberflächenseite (3) und einer gegenüberliegenden Oberflächenunterseite (4), wobei die Oberflächenelemente jeweils in einem Gehäuse (7) fixiert sind, und wobei das Gehäuse (7) eine zu der Oberflächenunterseite (4) weisende Gehäuseoberseite und eine gegenüberliegende Gehäuseunterseite (8) aufweist und wobei eine Trägerplatte (10) vorgesehen ist, und wobei jeweils die Gehäuse (7) an ihrer Gehäuseunterseite (8) jeweils zumindest ein vorstehendes Fixierelement aufweisen zur Fixierung der Oberflächenelemente an der Trägerplatte (10), wobei die Trägerplatte (10) die zwei oder mehreren Oberflächenelemente miteinander verbindet,
wobei jedes Fixierelement ein Indexelement aufweist, welches zwischen Trägerplatte (10) und Gehäuseunterseite (8) an dem Fixierelement angeordnet ist und mit dem Fixierelement lösbar kraftschlüssig und/oder lösbar formschlüssig verbunden ist und wobei die Indexelemente mit der Trägerplatte (10) stoffschlüssig verbunden sind, so dass jedes Oberflächenelement separat lösbar an der Trägerplatte (10) fixiert ist und wobei mittels der Indexelemente eine Anordnung der Oberflächenelemente relativ und planar zueinander bewerkstelligt ist.

2. Elektronikeinheit (1) nach Anspruch 1, **dadurch gekennzeichnet, dass** die Indexelemente eine mittige Ausnehmung (16) aufweisen und die Fixierelemente als längliche Montageelemente ausgebildet sind, und die Indexelemente auf die Montageelemente aufgesteckt sind.

3. Elektronikeinheit (1) nach Anspruch 2, **dadurch gekennzeichnet, dass** die Indexelemente an den Montageelementen drehbar gelagert sind.

4. Elektronikeinheit (1) nach Anspruch 2 oder 3, **dadurch gekennzeichnet, dass** die Fixierelemente als Schrauben (9) oder schraubenähnliche Montageelemente ausgebildet sind und die Indexelemente jeweils eine ringförmige Ausnehmung (16) zur Aufnahme der Schraube (9) oder des schraubenähnlichen Montageelementes aufweisen, so dass die Indexelemente und Fixierelemente eine lösbare Schraubverbindung ausbilden.

5. Elektronikeinheit (1) nach einem der vorhergehenden Ansprüche, **dadurch gekennzeichnet, dass** die Indexelemente und die Trägerplatte (10) als stoffschlüssige Verbindung miteinander durch einen Klebstoff (15) verklebt sind, wobei die Trägerplatte (10) entsprechende Durchlässe (14) zum Durchlass des Klebstoffs (15) auf die Indexelemente aufweist.

6. Elektronikeinheit (1) nach Anspruch 5, **dadurch gekennzeichnet, dass** die Indexelemente eine mittige Ausnehmung (16) zur Aufnahme der Fixierelemente aufweisen und die Indexelemente von einem Ausnehmungsrand (24) wegweisende Unterschnitte (13) und/oder Aussparungen (12) aufweisen, zur Aufnahme des Klebstoffs (15), wodurch zusätzlich zu der stoffschlüssigen Verbindung eine mechanische Fixierung der Trägerplatte (10) mit den Indexelementen ermöglicht ist.

7. Elektronikeinheit (1) nach Anspruch 6, **dadurch gekennzeichnet, dass** die Indexelemente als runde Indexplatten (11), mit runden Ausnehmungen (16) zur Aufnahme der Fixierelemente ausgebildet sind.

8. Elektronikeinheit (1) nach einem der vorhergehenden Ansprüche, **dadurch gekennzeichnet, dass** die Oberflächenmodule als Display (2) ausgebildet sind und das Gehäuse (7) als Displaygehäuse ausgebildet ist.

9. Elektronikeinheit (1) nach einem der vorhergehenden Ansprüche, **dadurch gekennzeichnet, dass** die Indexelemente als Kunststoff-Spritzgussbauteil ausgebildet sind.

10. Verfahren zur Herstellung einer Elektronikeinheit (1) mit zwei oder mehreren nebeneinander angeordneten Oberflächenelementen mit einer sichtbaren Oberfläche für ein Fahrzeug umfassend die Schritte:
- Bereitstellen von zwei oder mehr nebeneinander angeordneten Oberflächenelementen auf einer ersten Vorrichtung mit einer sichtbaren Oberflächenseite (3) und einer gegenüberliegenden Oberflächenunterseite (4), wobei die Oberflächenelemente jeweils in einem Gehäuse (7) fixiert sind, und wobei das Gehäuse (7) eine zu der Oberflächenunterseite (4) weisende Gehäuseoberseite und eine gegenüberliegende Gehäuseunterseite (8) aufweist und wobei jeweils die Gehäuse (7) an ihrer Gehäuseunterseite (8) jeweils zumindest ein vorstehendes Fixierelement aufweisen zur Fixierung der Oberflächenelemente an einer Trägerplatte (10), die die zwei oder mehreren Oberflächenelemente miteinander verbindet,
- Kraftschlüssiges und/oder formschlüssiges lösbares Verbinden der Fixierelemente mit jeweils einem Indexelement,
- Justieren der Oberflächenelemente in einer ersten Position relativ zueinander und zu der ersten Vorrichtung, so dass die einzelnen Oberflächenelemente planar zueinander angeordnet sind und einfrieren der Position der Oberflächenelemente auf der ersten Vorrichtung in der ersten justierten Position,
- Justieren der Trägerplatte (10) zu den Gehäusen (7) mit den Oberflächenelementen anhand von Ausrichtungspunkten an den Oberflächenelementen und/oder den Gehäusen (7) als auch justieren der Trägerplatte (10) zu den Indexelementen durch eine zweite Vorrichtung, so dass zwischen der Trägerplatte (10) und den Indexelementen jeweils zumindest ein Luftspalt (23) vorhanden ist,
- Stoffschlüssiges verbinden der Indexelemente mit der Trägerplatte (10), so dass der Luftspalt (23) anhand der stoffschlüssigen Verbindung zumindest teilweise geschlossen wird, so dass jedes Oberflächenelement separat lösbar an der Trägerplatte (10) fixiert ist und wobei mittels der Indexelemente eine Justage der Oberflächenelemente relativ und planar zueinander ermöglicht wird.

11. Verfahren nach Anspruch 10, **dadurch gekennzeichnet, dass** die erste Vorrichtung die Oberflächenelemente zusätzlich zu den an den Oberflächenelementen angrenzenden Bauteilen ausrichtet.

12. Verfahren nach Anspruch 10 oder 11, **dadurch gekennzeichnet, dass** die Indexelemente und die Trägerplatte (10) als stoffschlüssige Verbindung miteinander durch einen Klebstoff (15) verklebt werden, wobei die Trägerplatte (10) entsprechende Durchlässe zum Durchlass des Klebstoffs (15) auf die Indexelemente aufweist, und wobei die Indexelemente eine mittige Ausnehmung (16) zur Aufnahme der Fixierelemente aufweisen, wobei die Indexelemente von einem Ausnehmungsrand (24) wegweisende Unterschnitte (13) und/oder Aussparungen (12) aufweisen, zur Aufnahme des Klebstoffs (15), wodurch zusätzlich zu der stoffschlüssigen Verbindung eine mechanische Fixierung der Trägerplatte (10) mit den Indexelementen ermöglicht wird.

13. Verfahren nach einem der vorhergehenden Ansprüche 10,11 oder 12, **dadurch gekennzeichnet, dass** die Indexelemente ringförmig ausgebildet sind und eine mittige Ausnehmung (16) aufweisen und die Fixierelemente als Schrauben (9) oder schraubenähnliche Montageelemente ausgebildet sind, und die Indexelemente auf die Schrauben (9) oder schraubenähnliche Montageelemente aufgeschraubt werden, so dass eine lösbare Schraubverbindung zwischen Indexelementen und Fixierelementen ausgebildet wird.

14. Verfahren nach einem der vorhergehenden Ansprüche 10 bis 13, **dadurch gekennzeichnet, dass** die Indexelemente an den Fixierelementen drehbar gelagert werden.

15. Verwendung des Verfahrens nach einem der vorhergehenden Ansprüche 10 bis 14 zur Herstellung einer Anzeigevorrichtung mit mehreren nebeneinander angeordneten Displays (2) als Oberflächenmodule, wobei das Gehäuse (7) als Displaygehäuse ausgebildet wird und wobei die Displays (2) mit je einer Glasplatte (6) optisch gebondet sind.

## Claims

1. Electronic unit (1) for a vehicle, comprising two or more surface elements arranged next to one another and with a visible surface side (3) and an opposite surface underside (4), wherein the surface elements are each fixed in a housing (7), and wherein the housing (7) has a housing top side facing the surface underside (4) and an opposite housing underside (8), and wherein a carrier plate (10) is provided, and wherein each housing (7) on its housing underside (8) has at least one protruding fixing element for fixing the surface elements to the carrier plate (10), wherein the carrier plate (10) connects the two or more surface elements together,
wherein each fixing element has an index element which is arranged on the fixing element between the carrier plate (10) and the housing underside (8) and is releasably connected to the fixing element by force fit and/or form fit, and wherein the index elements are connected to the carrier plate (10) by substance bonding so that each surface element is separately releasably fixed to the carrier plate (10), and wherein by means of the index elements, the surface elements are arranged relative to and level with one another.

2. Electronic unit (1) according to Claim 1, **characterized in that** the index elements have a central recess (16) and the fixing elements are configured as elongate mounting elements, and the index elements are push-fitted onto the mounting elements.

3. Electronic unit (1) according to Claim 2, **characterized in that** the index elements are rotatably mounted on the mounting elements.

4. Electronic unit (1) according to Claim 2 or 3, **characterized in that** the fixing elements are configured as screws (9) or screw-like mounting elements, and the index elements each have an annular recess (16) for receiving the screw (9) or screw-like mounting element so that the index elements and the fixing elements form a releasable screw connection.

5. Electronic unit (1) according to any of the preceding claims, **characterized in that** the index elements and the carrier plate (10) are bonded together by an adhesive (15) as a substance-bonded connection, wherein the carrier plate (10) has corresponding passages (14) for passage of the adhesive (15) onto the index elements.

6. Electronic unit (1) according to Claim 5, **characterized in that** the index elements have a central recess (16) for receiving the fixing elements, and the index elements have undercuts (13) and/or cutouts (12) pointing away from a recess edge (24) for receiving the adhesive (15), whereby in addition to the substance-bonded connection, a mechanical fixing of the carrier plate (10) to the index elements is possible.

7. Electronic unit (1) according to Claim 6, **characterized in that** the index elements are configured as round index plates (11) with round recesses (16) for receiving the fixing elements.

8. Electronic unit (1) according to any of the preceding claims, **characterized in that** the surface modules are configured as a display (2) and the housing (7) is configured as a display housing.

9. Electronic unit (1) according to any of the preceding claims, **characterized in that** the index elements are configured as plastic injection mouldings.

10. Method for manufacturing an electronic unit (1) with two or more surface elements arranged next to one another and with a visible surface, for a vehicle, comprising the steps:
- provision of two or more surface elements arranged next to one another on a first device and with a visible surface side (3) and an opposite surface underside (4), wherein the surface elements are each fixed in a housing (7), and wherein the housing (7) has a housing top side facing the surface underside (4) and an opposite housing underside (8), and wherein each housing (7) on its housing underside (8) has at least one protruding fixing element for fixing the surface elements to a carrier plate (10) which connects the two or more surface elements together,
- releasable connection of the fixing elements to a respective index element by force fit and/or form fit,
- adjustment of the surface elements in a first position relative to one another and to the first device, so that the individual surface elements are arranged level with one another, and freezing of the position of the surface elements in the first adjusted position on the first device,
- adjustment of the carrier plate (10) relative to the housings (7) with the surface elements by means of orientation points on the surface elements and/or the housings (7), and also adjustment of the carrier plate (10) relative to the index elements by a second device so that at least one air gap (23) is present between the carrier plate (10) and the respective index elements,
- substance-bonded connection of the index elements to the carrier plate (10) so that the air gap (23) is at least partially closed by means of the substance-bonded connection, so that each surface element is separately releasably fixed to the carrier plate (10), and wherein by means of the index elements, the surface elements can be adjusted relative to and level with one another.

11. Method according to Claim 10, **characterized in that** the first device also orients the surface elements relative to the components adjacent to the surface elements.

12. Method according to Claim 10 or 11, **characterized in that** the index elements and the carrier plate (10) are bonded together by means of an adhesive (15) as a substance-bonded connection, wherein the carrier plate (10) has corresponding passages for passage of the adhesive (15) onto the index elements, and wherein the index elements have a central recess (16) for receiving the fixing elements, wherein the index elements have undercuts (13) and/or cutouts (12) pointing away from a recess edge (24) for receiving the adhesive (15), whereby in addition to the substance-bonded connection, a mechanical fixing of the carrier plate (10) to the index elements is possible.

13. Method according to any of the preceding Claims 10, 11 or 12, **characterized in that** the index elements are annular and have a central recess (16), and the fixing elements are configured as screws (9) or screw-like mounting elements, and the index elements are screwed onto the screws (9) or screw-like mounting elements so that a releasable screw connection is formed between the index elements and the fixing elements.

14. Method according to any of the preceding Claims 10 to 13, **characterized in that** the index elements are rotatably mounted on the fixing elements.

15. Use of the method according to any of the preceding Claims 10 to 14 for manufacturing a display device with multiple mutually adjacent displays (2) as surface modules, wherein the housing (7) is configured as a display housing and wherein the displays (2) are each optically bonded to a glass plate (6).

## Revendications

1. Unité électronique (1) pour un véhicule, comprenant deux ou plusieurs éléments de surface agencés côte à côte avec une face visible (3) et une face inférieure opposée (4), les éléments de surface étant chacun fixés dans un boîtier (7) et le boîtier (7) présentant une face supérieure tournée vers la face inférieure (4) et une face inférieure opposée (8), et une plaque de support (10) étant prévue, et les boîtiers (7) comportant chacun, sur leur face inférieure (8), au moins un élément de fixation saillant destiné à fixer les éléments de surface à la plaque de support (10), la plaque de support (10) reliant les deux ou plusieurs éléments de surface entre eux,
chaque élément de fixation comprenant un élément d'indexation qui est agencé entre la plaque de support (10) et la face inférieure (8) du boîtier sur l'élément de fixation et qui est relié à l'élément de fixation de manière amovible par adhérence et/ou par complémentarité de forme, et les éléments d'indexation étant reliés à la plaque de support (10) par liaison matière, de sorte que chaque élément de surface est fixé séparément de manière amovible à la plaque de support (10) et les éléments d'indexation permettant d'obtenir un agencement des éléments de surface relatif et plan les uns par rapport aux autres.

2. Unité électronique (1) selon la revendication 1, **caractérisée en ce que** les éléments d'indexation présentent un évidement central (16) et les éléments de fixation sont conçus sous la forme d'éléments de montage allongés, et les éléments d'indexation sont enfichés sur les éléments de montage.

3. Unité électronique (1) selon la revendication 2, **caractérisée en ce que** les éléments d'indexation sont montés de manière rotative sur les éléments de montage.

4. Unité électronique (1) selon la revendication 2 ou la revendication 3, **caractérisée en ce que** les éléments de fixation sont réalisés sous forme de vis (9) ou d'éléments de montage similaires à des vis, et **en ce que** les éléments d'indexation présentent chacun un évidement annulaire (16) destiné à recevoir la vis (9) ou l'élément de montage similaire à une vis, de sorte que les éléments d'indexation et les éléments de fixation forment une liaison vissée amovible.

5. Unité électronique (1) selon l'une des revendications précédentes, **caractérisée en ce que** les éléments d'indexation et la plaque de support (10) sont assemblés par adhérence au moyen d'un adhésif (15), la plaque de support (10) présentant des passages correspondants (14) pour le passage de l'adhésif (15) sur les éléments d'indexation.

6. Unité électronique (1) selon la revendication 5, **caractérisée en ce que** les éléments d'indexation présentent un évidement central (16) destiné à recevoir les éléments de fixation et **en ce que** les éléments d'indexation présentent des contre-dépouilles (13) et/ou des évidements (12) s'éloignant d'un bord de l'évidement (24), destinés à recevoir l'adhésif (15), ce qui permet, en plus de la liaison par adhérence, une fixation mécanique de la plaque de support (10) avec les éléments d'indexation.

7. Unité électronique (1) selon la revendication 6, **caractérisée en ce que** les éléments d'indexation sont conçus sous la forme de plaques d'indexation rondes (11) avec des évidements ronds (16) destinés à recevoir les éléments de fixation.

8. Unité électronique (1) selon l'une des revendications précédentes, **caractérisée en ce que** les modules de surface sont conçus sous la forme d'un afficheur (2) et **en ce que** le boîtier (7) est conçu sous la forme d'un boîtier d'afficheur.

9. Unité électronique (1) selon l'une des revendications précédentes, **caractérisée en ce que** les éléments d'indexation sont réalisés sous la forme de composants moulés par injection en matière plastique.

10. Procédé de fabrication d'une unité électronique (1) comportant deux ou plusieurs éléments de surface agencés les uns à côté des autres avec une surface visible pour un véhicule, comprenant les étapes suivantes :
- mettre à disposition deux ou plusieurs éléments de surface agencés les uns à côté des autres sur un premier dispositif avec une face visible (3) et une face inférieure opposée (4), les éléments de surface étant chacun fixés dans un boîtier (7), et le boîtier (7) présentant une face supérieure tournée vers la face inférieure (4) et une face inférieure opposée (8), et les boîtiers (7) présentant chacun, sur leur face inférieure (8), au moins un élément de fixation en saillie pour fixer les éléments de surface sur une plaque de support (10) qui relie les deux ou plusieurs éléments de surface entre eux,
- assembler les éléments de fixation, de manière amovible, par adhérence et/ou par complémentarité de forme, à, respectivement, un élément d'indexation,
- ajuster les éléments de surface dans une première position les uns par rapport aux autres et par rapport au premier dispositif, de telle sorte que les différents éléments de surface soient agencés de manière plane les uns par rapport aux autres, et figer la position des éléments de surface sur le premier dispositif dans la première position ajustée,
- ajuster la plaque de support (10) par rapport aux boîtiers (7) avec les éléments de surface au moyen de points d'alignement sur les éléments de surface et/ou les boîtiers (7), et ajuster la plaque de support (10) par rapport aux éléments d'indexation au moyen d'un deuxième dispositif, de telle sorte qu'il existe au moins un espace d'air (23) entre la plaque de support (10) et les éléments d'indexation respectifs,
- assembler par liaison matière des éléments d'indexation à la plaque de support (10) de telle sorte que l'espace d'air (23) soit au moins partiellement fermé par la liaison de matière, de telle sorte que chaque élément de surface soit fixé de manière séparée et amovible à la plaque de support (10) et que les éléments d'indexation permettent un ajustement des éléments de surface les uns par rapport aux autres et dans le plan.

11. Procédé selon la revendication 10, **caractérisé en ce que** le premier dispositif aligne les éléments de surface en plus des composants adjacents aux éléments de surface.

12. Procédé selon la revendication 10 ou la revendication 11, **caractérisé en ce que** les éléments d'indexation et la plaque de support (10) sont reliés entre eux par une liaison par adhérence au moyen d'un adhésif (15), la plaque de support (10) présentant des passages correspondants pour le passage de l'adhésif (15) sur les éléments d'indexation, et les éléments d'indexation présentant un évidement central (16) pour recevoir les éléments de fixation, les éléments d'indexation présentant des contre-dépouilles (13) et/ou des évidements (12) s'éloignant d'un bord de l'évidement (24), destinés à recevoir l'adhésif (15), ce qui permet, en plus de la liaison par adhérence, une fixation mécanique de la plaque de support (10) aux éléments d'indexation.

13. Procédé selon l'une des revendications précédentes 10, 11 ou 12, **caractérisé en ce que** les éléments d'indexation sont de forme annulaire et présentent un évidement central (16) et les éléments de fixation sont réalisés sous forme de vis (9) ou d'éléments de montage similaires à des vis, et les éléments d'indexation sont vissés sur les vis (9) ou les éléments de montage similaires à des vis, de manière à former une liaison vissée amovible entre les éléments d'indexation et les éléments de fixation.

14. Procédé selon l'une des revendications 10 à 13 précédentes, **caractérisé en ce que** les éléments d'indexation sont montés de manière rotative sur les éléments de fixation.

15. Utilisation du procédé selon l'une des revendications précédentes 10 à 14 pour la fabrication d'un dispositif d'affichage avec plusieurs afficheurs (2) agencés les uns à côté des autres en tant que modules de surface, le boîtier (7) étant conçu sous la forme d'un boîtier d'afficheur, et les afficheurs (2) étant reliés optiquement à une plaque de verre (6) respective.
